# EUROPEAN PATENT SPECIFICATION

(11) **EP 2 503 808 B1**
(45) Date of publication and mention of the grant of the patent: **15.07.2020**
(21) Application number: 11159660.7
(22) Date of filing: 24.03.2011
(51) Int. Cl.: H04W 12/06, H04L 29/06, H04W 4/80, H04W 12/00, H04W 88/06

(54) **COMMUNICATIONS SYSTEM AN METHOD FOR SUBSCRIBING TO A CELLULAR NETWORK USING A PERSONAL INFORMATION TOKEN**
KOMMUNIKATIONSSYSTEM UND VERFAHREN ZUM ANMELDEN AN EINEM ZELLULAREN NETZ
MIT EINEM PERSÖNLICHEN INFORMATIONSTOKEN
SYSTÈME DE COMMUNICATION ET PROCÉDÉ POUR ENREGISTRER DANS UN RÉSEAU CELLULAIRE
UTILISANT UN JETON D'INFORMATIONS PERSONNELLES

(43) Date of publication of application: 26.09.2012
(73) Proprietor: BlackBerry Limited, Waterloo, ON N2K 0A7 (CA)
(72) Inventor: Fyke, Steven Henry, Waterloo Ontario N2L 3L3 (CA); Walker, David Ryan, Waterloo Ontario N2L 3L3 (CA); Pasquero, Jerome, Waterloo Ontario N2L 3L3 (CA)
(74) Representative: Hanna Moore + Curley

(56) References cited:
- WO-A1-2012/058773
- WO-A2-2008/142367
- GB-A- 2 365 699
- US-A- 5 668 875
- US-A1- 2009 036 126
- US-A1- 2010 029 200

## Description

### Technical Field

The present disclosure relates to the field of communications systems, and, in particular, to communications systems including personal information tokens for storing personalized lists and for communication with electronic devices.

### Background

In the workplace and home today, there typically are a variety of electronic devices, such as telephones, desktop computers, and laptop computers, that are communally used. While the sharing of a particular electronic device by multiple individuals may save space and money, it also presents certain challenges.

For example, some electronic devices may be personalized according to personal preferences. In some instances, individuals who share an electronic device may either re-personalize the electronic device each time they use it, or create separate accounts for each individual, with each account having storable personalization preferences, where applicable.

United States Patent No. 5668875 discloses a method and apparatus for authenticating a roaming subscriber.

International Patent Publication No.
WO 2008/142367 discloses a Security Manager Device for allowing the secure establishment of network connections between devices, the Security Manager Device comprising a memory for storing network authentication information for a network and a transmitter for wirelessly transmitting the stored network authentication information to a device to be connected to a second device.

United States Patent Applicant No. 2010/029200 discloses projecting temporarily the subscriber information of a Master SIM Card to a Slave SIM Card in another device.

Aspects of an invention are defined in the independent claims. Some optional features are defined in the dependent claims.

### Brief Description of the Drawings

FIG. 1 is a schematic block diagram of a communications system in accordance with an example embodiment.
FIG. 2 is a more detailed schematic block diagram of the communications system of FIG. 2 in accordance with an alternative example.
FIG. 3 is a flowchart illustrating method aspects associated with the communications system of FIGS. 1 and 2.
FIG. 4 is a detailed schematic block diagram of another embodiment of a communications system in accordance with an example embodiment.
FIG. 5 is a detailed schematic block diagram of an additional embodiment of a communications system in accordance with an example embodiment.
FIG.6 is a flowchart of an example method of operating the communications system of FIG. 4.
FIG.7 is a flowchart of another example method of operating the communications system of FIG. 4.
FIG. 8 is a flowchart of an example method of operating the communications system of FIG. 5.
FIG. 9 is a schematic block diagram illustrating example components which may be used in the communications systems of FIGS. 1, 2, 4, and 5 in accordance with an example embodiment.

### Detailed Description

The present description is made with reference to the accompanying drawings, in which various embodiments are shown. However, many different embodiments may be used, and thus the claims should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communications system is provided herein which may be for communicating with a cellular network. The communications system may include an electronic device comprising an optional display, a cellular device, a first wireless personal area network (WPAN) device, and a first processor coupled to the display, the cellular device, and the first WPAN device. The communications system may also include a personal information token comprising a second processor and a second WPAN device coupled thereto. The second processor may be configured to store at least one subscription key, and wirelessly transmit the at least one subscription key to the electronic device based upon proximity therewith, via the second WPAN device, so that the first processor, via the cellular device, subscribes the electronic device to the cellular network based upon the subscription key.

The first processor may also be configured to associate the electronic device with a telephone number associated with the subscription key when the electronic device is subscribed to the cellular network. In addition, the first processor may also be configured to store a primary subscription key, to subscribe the electronic device to the cellular network based upon the primary subscription key, and to associate the electronic device with a telephone number associated with the primary subscription key.

Further, the first processor may also be configured to associate the electronic device with at least one e-mail address associated with the subscription key when the electronic device is subscribed to the cellular network. Also, the first processor may also be configured to unsubscribe the electronic device from the cellular network based upon a lack of proximity with the personal information token.

In some application, the second processor may also be configured to store personal preferences, and wirelessly transmit the personal preferences, via the second WPAN device, to the electronic device based upon proximity therewith. In these applications, the first processor may also be configured to operate based upon the personal preferences.

The personal preferences comprise at least one of display appearances, ringtone settings, and application settings. Furthermore, the personal preferences may comprise at least one personalized list, and the first processor may operate based upon the personalized list by displaying the at least one personalized list on the display.

The at least one personalized list may comprise at least one of a contacts list and a favorite web sites list, and the first processor may cease to operate based upon the personal preferences based upon passage of a period of time. The second processor and second WPAN device may also be configured to enable operation of the electronic device. The first and second WPAN devices may comprise respective first and second wireless body area network (WBAN) transceivers.

A related method aspect is directed to a method of operating a communications system including an electronic device comprising a cellular device and first wireless personal area network (WPAN) device coupled to a first processor, and a personal information token comprising a second WPAN device coupled to a second processor. The method may comprise storing at least one subscription key using the second processor. The method may also include wirelessly transmitting, using the second wireless personal area network (WPAN) device, the at least one subscription key to the electronic device based upon proximity therewith so that the first processor, via the cellular device, subscribes the electronic device to a cellular network based upon the subscription key.

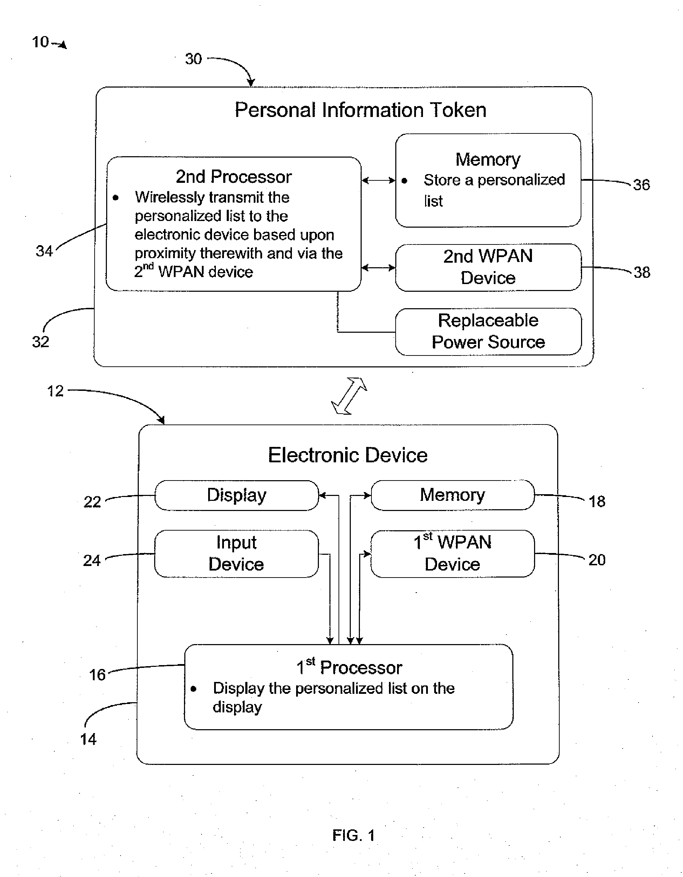

With reference initially to FIG. 1, a communications system **10** is now described. The communications system **10** includes an electronic device **12** and a personal information token **30.** Example electronic devices **12** may include portable or personal media players (e.g., music or MP3 players, video players, etc.), remote controls (e.g., television or stereo remotes, etc.), portable gaming devices, portable or mobile telephones, smartphones, tablet computers, etc.

The electronic device **12** includes a housing **14** carrying a first processor **16,** which is in turn coupled to a memory **18,** a first wireless personal area network (WPAN) device **20,** a display **22,** and an input device **24.** The first WPAN device **20** may be a WPAN transceiver or receiver, for example. The memory **18** may include volatile portions, such as random access memory (RAM), and non-volatile portions, such as flash memory or a hard drive, for example.

The first WPAN device **20** may operate according to a protocol described by any section of the Institute for Electrical and Electronics Engineers (IEEE) 802.15 standard, which is hereby incorporated by reference in its entirety. In addition, it should be noted that the first WPAN device **20** may be a wireless body area network (WBAN) transceiver, and may operate according to the IEEE 802.15.6 standard, for example, although other suitable personal or short-range communications formats may also be used.

The display **22** may comprise a typical liquid crystal display (LCD), and the input device **24** may be a keyboard, mouse, touchpad, or combinations thereof. In addition, it should be appreciated that the display **22** may comprise a touch sensitive display, and may therefore also function as at least part of the input device **24.**

The electronic device **12** is personalizeable. Indeed, in some applications, the electronic device **12** may be operable according to a plurality of accounts, with each account having a variety of account settings that personalize the electronic device **12.** For example, the account settings may include a list of favorite web sites, or a list of contacts. The account settings may also include a list of executable programs, access to an e-mail account or accounts, or access to a set of personal files, for example.

The personal information token **30** may be wearable or otherwise carryable. For example, the personal information token **30** may be carried on a belt, may be worn about a neck as a necklace, may be worn about a wrist as a bracelet, or may be attached to a key chain, etc. The personal information token **30** may also be implanted in a body, in some applications. The personal information token **30** includes a portable housing **32** carrying a second processor **34,** which is, in turn, coupled to a memory **36** and a second WPAN device **38.** The second WPAN device may also be a WPAN transceiver or receive, for example. The memory **36** may include both volatile and non-volatile portions. The second WPAN device **38,** like the first WPAN device **20,** may operate according to the IEEE 802.15 standard, and may be a WBAN transceiver.

The memory **36** of the personal information token **30** stores at least one personalized list. It should be appreciated that the memory **36** may store any number of personalized lists, and that these personalized lists may store a variety of items. For example, the memory **36** may store a first personalized list including contacts, and may store a second personalized list including favorite web sites. The second processor **34** wirelessly transmits the personalized list to the electronic device **12** based upon proximity therewith, and via the second WPAN device **37.**

The electronic device **12** receives the personalized list via the first WPAN device **20,** and the first processor **16** then displays the personalized list on the display **22.** This functionality advantageously allows the electronic device **12** to be personalized based upon the proximity of the personal information token **30,** and without further input.

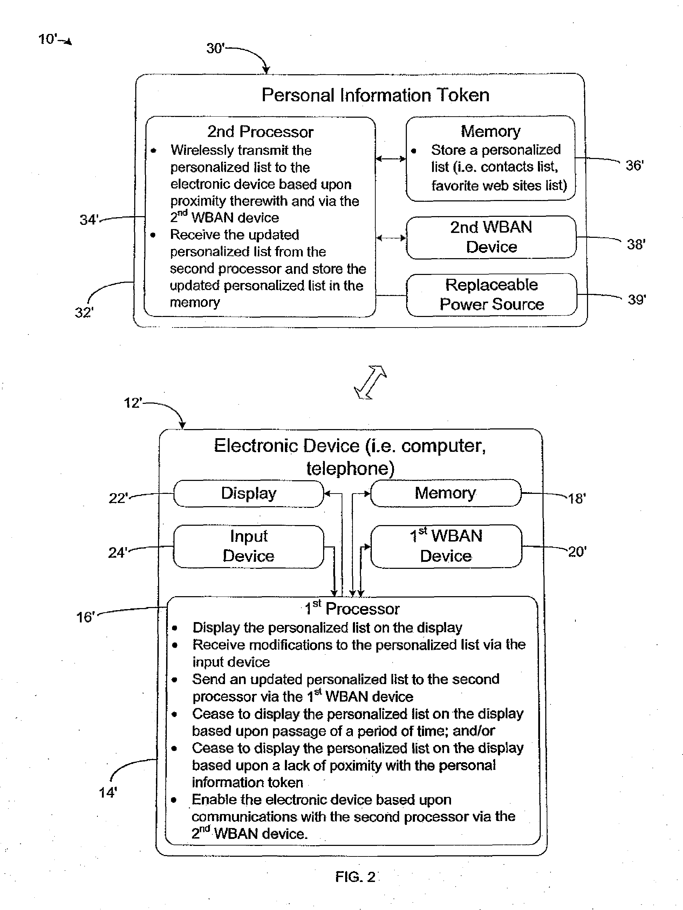

A more detailed embodiment of a communications system **10'** is now described with reference to FIG. 2. Here, the first and second WPAN devices **20', 38'** comprise first and second WBAN transceivers, respectively. Additionally, the personalized list stored in the memory **36'** of the personal information token **30'** comprises a contacts list or a favorite web sites list. Moreover, the first processor **14'** of the electronic device **12'** is configured to accept modifications to the personalized list via the input device **24',** and to generate an updated personalized list based upon those modifications. The first processor **16'** then sends the updated personalized list to the second processor **34'** via the first WBAN transceiver **20'.** Such modifications may include additions to the personalized list, deletions from the personalized list, and a reordering of items on the personalized list, for example.

The second processor **34'** receives the updated personalized list via the second WBAN transceiver **38',** and stores the updated personalized list in the memory **36'.** This advantageously allows changes to be easily made to the personalized list.

In some applications, the first processor **14'** may generate the updated personalized list without express direction to do so. For example, the first processor **14'** may reorder the personalized list based upon the frequency of selection of items thereon. Once this updated and reordered personalized list is transmitted to the personal information token **30'** and stored in the memory **36'** thereof, this may advantageously ensure that the items of the personalized list that are most often used are sent to the electronic device **12'** first, when the personalized list is sequentially sent thereto. Additionally, the first processor **14'** may add items to the personalized list based upon a device event (i.e. the first processor may add the phone number of incoming calls to a contacts list, or the processor may add to a web usage history web sites visited by the electronic device **12'**).

Alternatively, the first processor **14'** may flag certain entries of the personalized list without express direction to do so, and may generate the updated personalized list based thereupon. The flagged entires may be based upon their frequency of selection. Once this updated personalized list is transmitted to the personal information token **30'** and stored in the memory **36'** thereof, the second processor **34'** may transmit the personalized list non-sequentially to the electronic device **12',** such that the flagged entries are sent before the rest of the entries. This may help ensure that the items of the personalized list that are most often used are sent to the electronic device **12'** first, when the personalized list is non-sequentually sent thereto.

In some applications, the memory **36'** of the personal information token **30'** may store account access information related to a given account upon which the electronic device **12'** is operable, and the second processor **34'** may enable operation of the electronic device **12'** based upon that account access information. This may advantageously allow access to the account without further input of a password, for example, saving time, and enhancing convenience of use of the electronic device **12'.**

After displaying the personalized list on the second display **22',** the first processor **16'** may cease to display the personalized list on the display based upon passage of a period of time. Moreover, in some applications, the first processor **16'** may disable operation of the electronic device **12'** based upon the account access information, based upon passage of a period of time (i.e. the first processor **16'** may log out of the account based upon the passage of the period of time).

Furthermore, the first processor **16'** may cease to display the personalized list on the display **22'** based upon a lack of proximity with the personal information token **30'.** This advantageously increases security, as the personalized list will no longer be displayed when the personal information token **30'** (and presumably the body carrying that personal information token) is no longer in proximity with the electronic device **12'.**

It should be noted that the first WPAN device **20'** and second WPAN device **38'** may communicate using encrypted communications, such that the personalized list is not easily intercepted. In addition, in some applications, the first processor **16'** may display, on the display **22',** a prompt requesting manual entry of a password via the input device **24',** after recipt of the personalized list and before display of the personalized list.

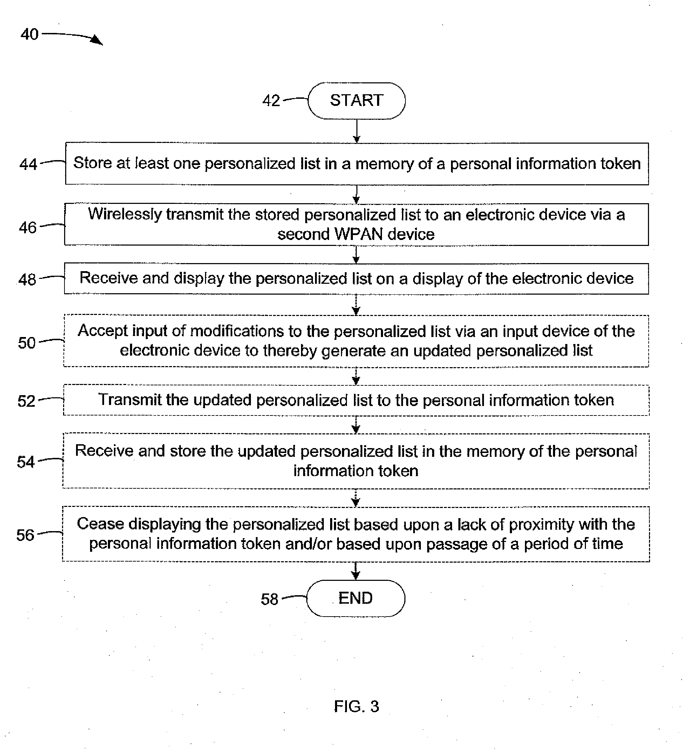

With reference to the flowchart **40** of FIG. 3, a method of operating the communications system of the present disclosure is now described. After the start (Block **42**), at least one personalized list is stored in the memory of the personal information token (Block **44**). The stored personalized list is then wirelessly transmitted to the electronic device via the second WPAN device (Block **46**). The first processor receives the personalized list, and displays it on the display of the electronic device (Block **48**).

Optionally, the first processor accepts input of modifications to the personalized list via the input device, and generates an updated personalized list thereupon (Block **50**). The updated personalized list is then transmitted to the personal information token (Block **52**).

The second processor receives the updated personalized list and stores it in the memory of the personal information token (Block **54**). The second processor may also optionally cease displaying the personalized list based upon a lack of proximity with the personal information token, and/or based upon passage of a period of time (Block **56**). Block **58** indicates the end of the method.

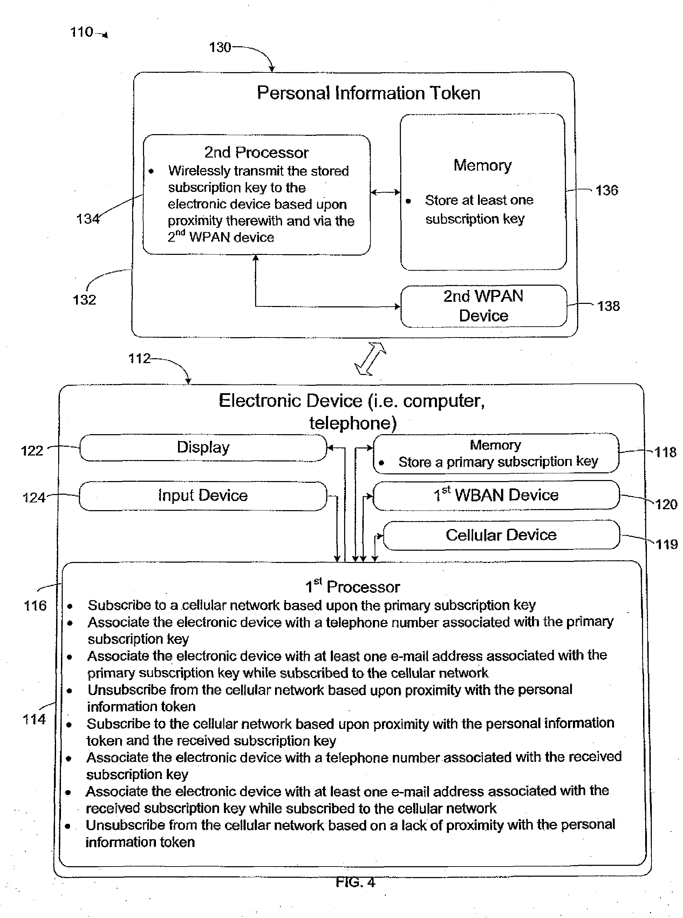

Referring now to FIG. 4, an additional embodiment of the communications system **110** is now described. It should be understood that the personal information token **130** and electronic device **112** are similar to the personal information tokens **30, 30'** and electronic devices **12, 12',** respectively, described above, and that components thereof not specifically described with respect to FIG. 4 function similarly, needing no further discussion herein.

In this embodiment, the electronic device **112** has a cellular device **119,** which may in some applications be a cellular transceiver. This cellular device **119** may be capable of one or two way cellular voice and/or data communications. The personal information token **130** may function as a SIM (subscriber information module) card, thereby enabling the electronic device **112** to receive or make phone calls, SMS messages, and e-mail messages associated with that cellular user account.

In addition, the electronic device **112** may also have a SIM card installed. For example, the memory **118** may store a primary subscription key, and the first processor **116** may subscribe the electronic device **112** to a cellular network based upon the primary subscription key. After the processor **116** subscribes the electronic device **112** to the cellular network (or as part of the subscription process), the processor associates the electronic device with a telephone number associated with the primary subscription key. Thereafter, the electronic device **112** may make and receive telephone calls using the telephone number.

In addition, also after the processor **116** subscribes the electronic device **112** to the cellular network (or as part of the subscription process), the processor optionally associates the electronic device with at least one e-mail address associated with the primary subscription key, so that the electronic device may be used to send and receive e-mail when subscribed to the cellular network.

In some applications, it may be desirable for the electronic device **112** to be associated with a plurality of accounts (via a plurality of subscription keys), or for the account to which the electronic device is associated to be switched. To effectuate this functionality, the memory **136** of the personal information token **30** may store at least one subscription key, and the second processor **134** may wirelessly transmit the stored subscription key to the electronic device **112** based upon proximity therewith and via the second WPAN device **138.**

The first processor **16** may also optionally unsubscribe from the cellular network based upon proximity with the personal information token **130,** and then re-subscribe to the cellular network based upon the received subscription key. After the processor **116** subscribes the electronic device **112** to the cellular network based upon the received subscription key (or as part of the subscription process), the processor associates the electronic device with a telephone number associated with the received subscription key, and optionally associates the electronic device with at least one e-mail address associated with the received subscription key while subscribed to the cellular network.

Stated differently, the electronic device **112** may disconnect from the cellular network (to which it was associated based upon the primary subscription key), and the re-associate to the cellular network based upon the received subscription key. Therefore, the electronic device **112** may be associated with a different telephone number and e-mail address based upon proximity with the personal information token **130.** This advantageously allows the electronic device **112** to be used with multiple cellular accounts, or allows multiple electronic devices to be used with a single cellular account.

When the personal information token **130** is no longer in proximity to the electronic device **112,** the first processor **116** may unsubscribe the electronic device from the cellular network (and then re-subscribe the electronic device to the cellular network based upon the primary subscription key, in some applications).

It should be understood that the personal information token **130** and electronic device **112** may also perform all functions as described with reference to the personal information tokens **30, 30'**, and electronic devices **12, 12',** above.

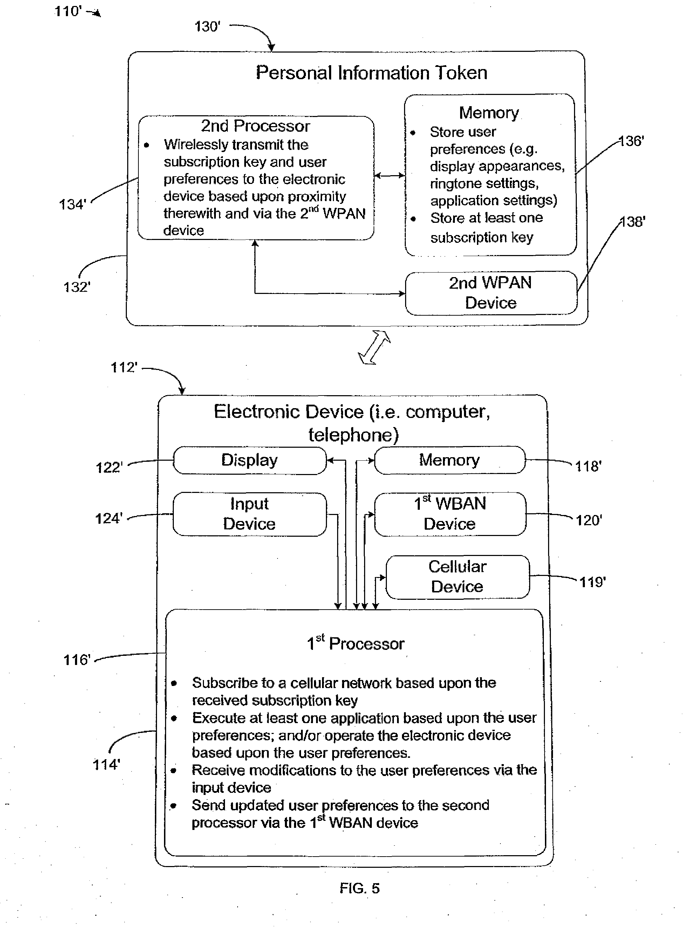

As now explained with reference to FIG. 5 the personal information token **130'** may store user preferences in the memory **136'.** It should be understood that the personal information token **130'** and electronic device **112'** are similar to the personal information tokens **30, 30', 130** and electronic devices **12, 12', 112,** respectively, described above, and that components thereof not specifically described with respect to FIG. 5 function similarly, needing no further discussion herein.

The user preferences may be associated with the execution of one or more applications by the electronic device **112',** for example, and may include a display font size and type, a user interface theme, and keyboard mappings for an application. These user preferences may also include interface shortcuts for either an application, or operation of the electronic device **112'** itself (i.e. a user preference may be for the electronic device to execute a given application when a certain key of the input device **124'** is pressed). The user preferences may even enable or disable certain features of an application, such as spell checking or grammar checking. In fact, in some cases, the user preferences may comprise operating system preferences, such as the assignment of ring tones, or the designation of a set of preferred applications. The above examples of user preferences should be understood to be non-limiting, and it should be understood that any number of additional user preferences could be stored in the memory **136'** of the personal information token **130',** and that these user preferences may in fact include the personalized lists as described above.

The second processor **134'** wirelessly transmits the user preferences to the electronic device **112'** based upon proximity therewith and via the second WPAN device **138'.** The first processor **116'** then operates the electronic device **112'** based upon the user preferences, which may include executing at least one application based upon the user preferences.

The first processor **116'** may also receive modifications to the user preferences via the input device **124',** and may send the updated user preferences to the second processor **134'** via the first WBAN transceiver **120'.** In addition, the first processor **114'** may cease operating the electronic device **112'** based upon the user preferences based upon a lack of proximity with the personal information tag **130'.**

Those skilled in the art will appreciate that the personal information token **130'** and electronic device **112'** may also perform all functions as described with reference to the personal information tokens **30, 30', 130** and electronic device **12, 12', 112** above.

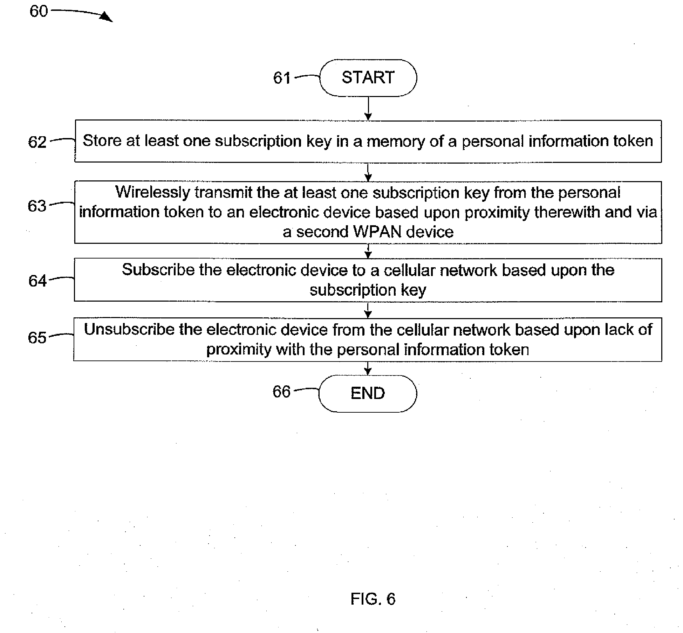

With reference to the flowchart **60** of FIG. 6, a method of operating the communications system of the present disclosure is now described. After the start (Block **61**), at least one subscription key is stored in a memory of a personal information token (Block **62**). The at least one subscription key is then wireless transmitted from the personal information token to an electronic device based upon proximity therewith and via a second WPAN device (Block **63**). The electronic device is then subscribed to a cellular network based upon the subscription key (Block **64**). Further, the electronic device may be unsubscribed from the cellular network based upon a lack of proximity with the personal information token (Block **65**). Block **66** indicates the end of the method.

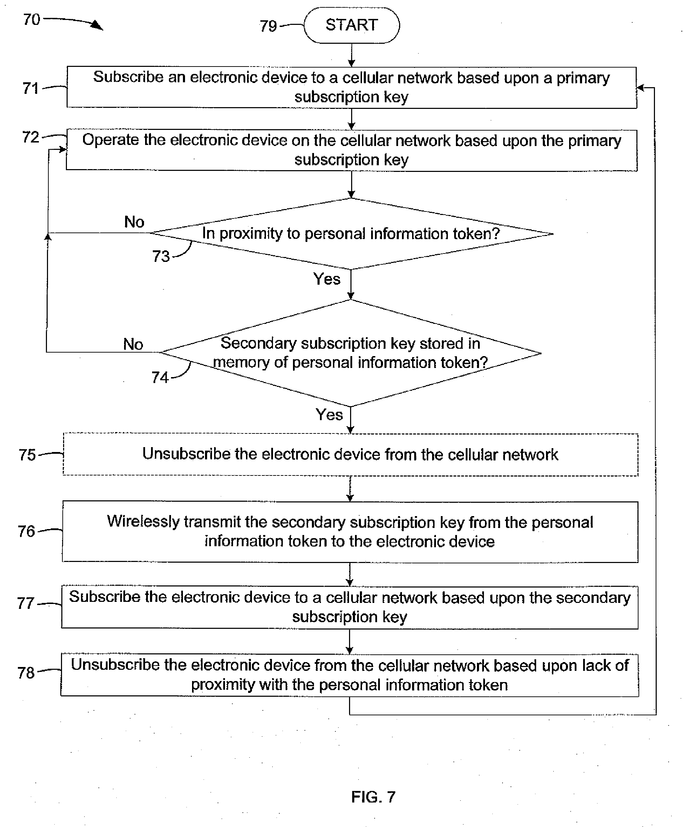

Another method of operating the communications system of the present disclosure is now described with reference to the flowchart **70** of FIG. 7. Here, the electronic device is subscribed to a cellular network based upon a primary subscription key (Block **71**), and then operates on the cellular network based upon the primary subscription key (Block **72**). At Block **73,** if the electronic device is not in proximity to a personal information token, it continues to operate on the cellular network based upon the primary subscription key. If the electronic device is in proximity to the personal information token at Block **73,** but a secondary subscription key is not stored in the memory of the personal information token at Block **74,** the electronic device also continues to operate on the cellular network based upon the primary subscription key.

If, however, the electronic device if in proximity to the personal information token at Block **73,** and a secondary subscription key is stored in the memory of the personal information token at Block **74,** the electronic device is then unsubscribed from the cellular network (Block **75**). The secondary subscription key is then wirelessly transmitted from the personal information token to the electronic device (Block **76**). The electronic device is then subscribed to the cellular network based upon the secondary subscription key (Block **77**). The electronic device may then be unsubscribed from the cellular network based upon lack of proximity with the personal information token (Block **78**), and may then be re-subscribed to the cellular network based upon a primary subscription key (Block **71** again).

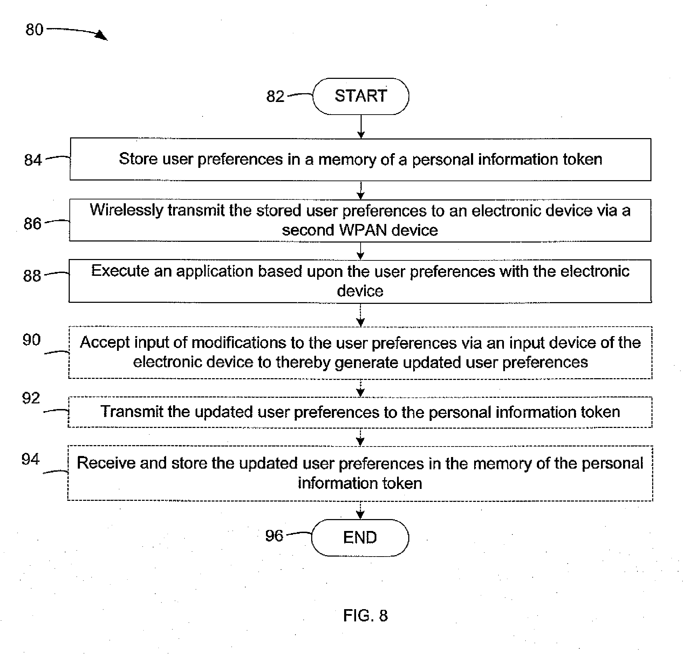

With reference to the flowchart **80** of FIG. 8, a method of operating the communications system of the present disclosure is now described. After the start (Block **82**), user preferences are stored in the memory of the personal information token (Block **84**). The stored user preferences are then wirelessly transmitted to the electronic device via the second WPAN device (Block **86**). The first processor receives the user preferences, and executes an application based thereupon (Block **88**).

Optionally, the first processor accepts input of modifications to the user preferences via the input device, and generates updated user preferences thereupon (Block **90**). The updated user preferences are then transmitted to the personal information token (Block **92**).

The second processor receives the updated user preferences and stores them in the memory of the personal information token (Block **94**). Block **96** indicates the end of the method.

Some of the steps illustrated in the above flowcharts **60, 70, 80** may be performed in an order other than that which is described. Also, some steps may be optional, additional steps may be added, and some of the illustrated steps may be substituted with other steps.

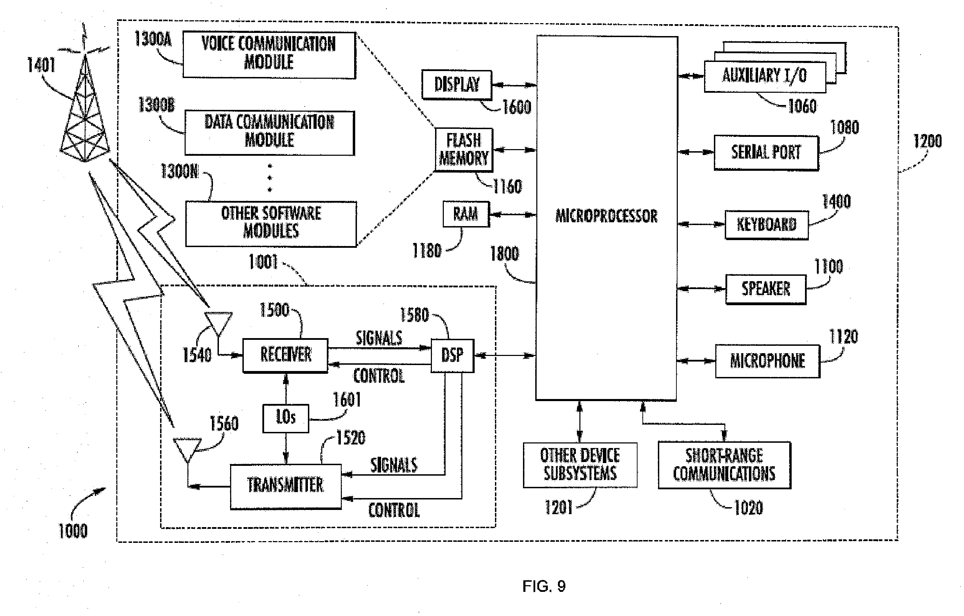

Example components of a mobile wireless communications device **1000** that may be used in accordance with the above-described embodiments are further described below with reference to FIG. 9. The mobile wireless communications device **1000** may function as either the electronic device described above, or the personal information token as described above. The device **1000** illustratively includes a housing **1200,** a keypad or keyboard **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.** Alternatively or additionally, the keypad **1400** may be a "soft" keypad implemented, for example, by providing images of keys on the display **1600.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary input/output (I/O) device **1060.** A device may also be used to compose data items, such as e-mail messages, using the keypad **1400** and/or some other auxiliary I/O device **1060,** such as a trackball, a touchpad, a rocker switch, a thumb-wheel, touch sensitive display or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices. The short-range communications subsystem may also include a wireless personal area network (WPAN) module, or near field communications (NFC) module, for example.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A communications system (110) for communicating with a cellular network, the communications system comprising:
an electronic device (112, 12') comprising:
a cellular device (119),
a first wireless personal area network, WPAN, device (120),
a first processor (116', 16') coupled with said cellular device and said first WPAN device,
a display (22'), and
an input device (124); and
a personal information token (130) comprising:
a second processor (134) and a second WPAN device (138) coupled therewith, the second processor being configured to
store at least one subscription key, and
cause said second WPAN device to wirelessly transmit the at least one subscription key to said first WPAN device based upon proximity therewith, so that said first processor is configured to cause said cellular device to subscribe said electronic device to the cellular network based upon the subscription key;
wherein said first processor (116', 16') is further configured to associate said electronic device (112, 12') with at least one e-mail address associated with the at least one subscription key when said electronic device is subscribed to the cellular network,
wherein said first processor (116', 16') is further configured to unsubscribe said electronic device (112) from the cellular network based upon a lack of proximity with said personal information token (130),
wherein said second processor (134') is further configured to store a personal preference, and wirelessly transmit the personal preference, via said second WPAN device (138'), to said first WPAN device (120') based upon proximity therewith, the personal preference comprising at least one personalized list,
wherein said first processor (116', 16') is further configured to operate based upon the personal preference, the operation being displaying the at least one personalized list on said display (22'),
wherein said first processor (116', 16') is further configured to accept modifications to the personalized list via the input device (124) of the electronic device and generate an updated personalized list based upon the modifications ;
wherein said first processor (116', 16') is further configured to send the updated personalized list to the second processor, and
the second processor is further configured to receive and store the updated personalized list.

2. The communication system of claim 1, wherein said first processor is further configured to associate said electronic device with a telephone number associated with the subscription key when said electronic device is subscribed to the cellular network.

3. The communications system (110) of Claim 2, wherein said first processor (116) is further configured to store a primary subscription key, to subscribe said electronic device (112) to the cellular network based upon the primary subscription key, and to associate said electronic device with a telephone number associated with the primary subscription key.

4. The communications system (110') of Claim 1, wherein the personal preference further comprises at least one of a display appearance, a ringtone setting, or an application setting.

5. The communication system of claim 1, wherein the at least one personalized list comprises at least one of a contacts list and a favorite web sites list.

6. The communications system (10') of Claim 1, wherein said second processor (34') and second WPAN device (38') are configured to enable operation of said electronic device (12').

7. A method of operating a communications system (110') including an electronic device (112', 12') and a personal information token (130'), the electronic device (112', 12') comprising a cellular device (119'), a first wireless personal area network, WPAN, (120') device coupled with a first processor (116', 16'), a display (22'), and an input device (124), and the personal information token (130') comprising a second WPAN device (138)' coupled with a second processor (134'), the method comprising:
storing at least one subscription key in a memory (136') using the second processor;
wirelessly transmitting, using the second wireless personal area network, WPAN, device (138'), the at least one subscription key to the first WPAN device based upon proximity therewith so that the first processor, via the cellular device, subscribes the electronic device to a cellular network based upon the subscription key;
associating the electronic device (112', 12') with at least one e-mail address associated with the subscription key when the electronic device is subscribed to the cellular network, using the first processor (116', 16');
unsubscribing the electronic device (112', 12') from the cellular network based upon a lack of proximity with the personal information token (130), using the first processor (116', 16');
wherein said second processor (134') is further configured to store a personal preference, the personal preference comprising at least one personalized list and the method further comprises:
wirelessly transmitting the personal preference, via said second WPAN device (138'), to said first WPAN device (120') based upon proximity therewith;
operating, by said first processor (116', 16'), based upon the personal preference, the operation being displaying the at least one personalized list on said display (22');
accepting, by said first processor (116', 16'), modifications to the personalized list via the input device (124) of the electronic device and generating an updated personalized list based upon the modifications;
sending, by the first processor, the updated personalized list to the second processor; and
receiving and storing, by the second processor, the updated personalized list.

8. The method of claim 7, further comprising associating the electronic device (112) with a telephone number associated with the subscription key when the electronic device is subscribed to the cellular network, using the first processor.

9. The method of Claim 8, further comprising storing a primary subscription key, subscribing the electronic device (112', 12') to the cellular network based upon the primary subscription key, and associating the electronic device with a telephone number associated with the primary subscription key, using the first processor (116', 16').

## Patentansprüche

1. Kommunikationssystem (110) zum Kommunizieren mit einem Zellularnetz, wobei das Kommunikationssystem Folgendes umfasst:
eine elektronische Vorrichtung (112, 12'), die Folgendes umfasst:
eine Zellularvorrichtung (119),
eine erste Vorrichtung eines drahtlosen persönlichen Netzes (*wireless personal area network* - WPAN) (120),
einen ersten Prozessor (116', 16'), der mit der Zellularvorrichtung und der ersten WPAN-Vorrichtung gekoppelt ist,
eine Anzeige (22') und
eine Eingabevorrichtung (124); und
ein persönliches Informationstoken (130), das Folgendes umfasst:
einen zweiten Prozessor (134) und eine zweite damit gekoppelte WPAN-Vorrichtung (138), wobei der zweite Prozessor für Folgendes konfiguriert ist:
Speichern wenigstens eines Abonnementschlüssels, und
Veranlassen der zweiten WPAN-Vorrichtung, den wenigstens einen Abonnementschlüssel an die erste WPAN-Vorrichtung drahtlos zu übertragen, basierend auf einer Nähe dazu, so dass der erste Prozessor konfiguriert ist, um die Zellularvorrichtung zu veranlassen, die elektronische Vorrichtung mit dem Zellularnetz zu abonnieren, basierend auf dem Abonnementschlüssel;
wobei der erste Prozessor (116', 16') ferner konfiguriert ist, um die elektronische Vorrichtung (112, 12') mit wenigstens einer E-Mail-Adresse zu verknüpfen, die mit dem wenigstens einen Abonnementschlüssel verknüpft ist, wenn die elektronische Vorrichtung mit dem Zellularnetz abonniert wird,
wobei der erste Prozessor (116', 16') ferner konfiguriert ist, um die elektronische Vorrichtung (112) von dem Zellularnetz abzumelden, basierend auf einem Mangel an Nähe zu dem persönlichen Informationstoken (130),
wobei der zweite Prozessor (134') ferner konfiguriert ist, um eine persönliche Präferenz zu speichern und die persönliche Präferenz über die zweite WPAN-Vorrichtung (138') an die erste WPAN-Vorrichtung (120') drahtlos zu übertragen, basierend auf der Nähe dazu, wobei die persönlichen Präferenz wenigstens eine personalisierte Liste umfasst,
wobei der erste Prozessor (116', 16') ferner konfiguriert ist, um basierend auf der persönlichen Präferenz betrieben zu werden, wobei der Betrieb ein Anzeigen wenigstens einer personalisierten Liste auf der Anzeige (22') ist,
wobei der erste Prozessor (116', 16') ferner konfiguriert ist, um Änderungen an der personalisierten Liste über die Eingabevorrichtung (124) der elektronischen Vorrichtung zu akzeptieren und eine aktualisierte personalisierte Liste basierend auf den Änderungen zu erzeugen;
wobei der erste Prozessor (116', 16') ferner konfiguriert ist, um die aktualisierte personalisierte Liste an den zweiten Prozessor zu senden, und der zweite Prozessor ferner konfiguriert ist, um die aktualisierte personalisierte Liste zu empfangen und zu speichern.

2. Kommunikationssystem nach Anspruch 1, wobei der erste Prozessor ferner konfiguriert ist, um die elektronische Vorrichtung mit einer Telefonnummer zu verknüpfen, die mit dem Abonnementschlüssel verknüpft ist, wenn die elektronische Vorrichtung mit dem Zellularnetz abonniert wird.

3. Kommunikationssystem (110) nach Anspruch 2, wobei der erste Prozessor (116) ferner konfiguriert ist, um einen primären Abonnementschlüssel zu speichern, um die elektronische Vorrichtung (112) mit dem Zellularnetz zu abonnieren, basierend auf den primären Abonnementschlüsseln, und, um die elektronische Vorrichtung mit einer Telefonnummer zu verknüpfen, die mit dem primären Abonnementschlüssel verknüpft ist.

4. Kommunikationssystem (110') nach Anspruch 1, wobei die persönliche Präferenz ferner ein Anzeigenaussehen, eine Klingeltoneinstellung und/oder eine Anwendungseinstellung umfasst.

5. Kommunikationssystem nach Anspruch 1, wobei die wenigstens eine personalisierte Liste eine Kontaktliste und/oder eine Liste favorisierte Webseiten umfasst.

6. Kommunikationssystem (10') nach Anspruch 1, wobei der zweite Prozessor (34') und die zweite WPAN-Vorrichtung (38') konfiguriert sind, um den Betrieb der elektronischen Vorrichtung (12') zu aktivieren.

7. Verfahren zum Betreiben eines Kommunikationssystems (110'), einschließlich einer elektronischen Vorrichtung (112', 12') und eines persönlichen Informationstokens (130'), wobei die elektronische Vorrichtung (112', 12') eine Zellularvorrichtung (119'), eine erste Vorrichtung eines drahtlosen persönlichen Netzes (WPAN) (120'), die mit einem ersten Prozessor (116', 16') gekoppelt ist, eine Anzeige (22') und eine Eingabevorrichtung (124) umfasst, und das persönliche Informationstoken (130') eine zweite WPAN-Vorrichtung (138)', die mit einem zweiten Prozessor (134') gekoppelt ist, umfasst, wobei das Verfahren Folgendes umfasst:
Speichern wenigstens eines Abonnementschlüssels in einem Speicher (136') unter Verwendung des zweiten Prozessors;
drahtloses Übertragen, unter Verwendung der zweiten Vorrichtung eines drahtlosen persönlichen Netzes (WPAN) (138'), des wenigstens einen Abonnementschlüssels an die erste WPAN-Vorrichtung, basierend auf der Nähe dazu, so dass der erste Prozessor, über die Zellularvorrichtung, die elektronische Vorrichtung basierend auf dem Abonnementschlüssel mit einem Zellularnetz abonniert;
Verknüpfen der elektronischen Vorrichtung (112', 12') mit wenigstens einer E-Mail-Adresse, die mit dem Abonnementschlüssel verknüpft ist, wenn die elektronische Vorrichtung mit dem Zellularnetz abonniert ist, unter Verwendung des ersten Prozessors (116', 16');
Abmelden der elektronischen Vorrichtung (112', 12') von dem Zellularnetz basierend auf dem Mangel der Nähe zu dem persönlichen Informationstoken (130), unter Verwendung des ersten Prozessors (116', 16');
wobei der zweite Prozessor (134') ferner konfiguriert ist, um eine persönliche Präferenz zu speichern, wobei die persönliche Präferenz wenigstens eine personalisierte Liste umfasst und das Verfahren ferner Folgendes umfasst:
drahtloses Übertragen der persönlichen Präferenz über die zweite WPAN-Vorrichtung (138') an die erste WPAN-Vorrichtung (120') basierend auf der Nähe dazu;
Betreiben, durch den ersten Prozessor (116', 16), basierend auf der persönlichen Präferenz, wobei der Betrieb das Anzeigen der wenigstens einen personalisierten Liste auf der Anzeige (22') ist;
Akzeptieren, durch den ersten Prozessor (116', 16'), von Änderungen an der personalisierten Liste über die Eingabevorrichtung (124) der elektronischen Vorrichtung und Erzeugen einer aktualisierten personalisierten Liste basierend auf den Änderungen;
Senden, durch den ersten Prozessor, der aktualisierten personalisierten Liste an den zweiten Prozessor; und
Empfangen und Speichern, durch den zweiten Prozessor, der aktualisierten personalisierten Liste.

8. Verfahren nach Anspruch 7, das ferner das Verknüpfen der elektronischen Vorrichtung (112) mit einer Telefonnummer umfasst, die mit dem Abonnementschlüssel verknüpft ist, wenn die elektronische Vorrichtung mit dem Zellularnetz abonniert ist, unter Verwendung des ersten Prozessors.

9. Verfahren nach Anspruch 8, das ferner das Speichern eines primären Abonnementschlüssels, das Abonnieren der elektronischen Vorrichtung (112', 12') mit dem Zellularnetz, basierend auf dem primären Abonnementschlüssel, und das Verknüpfen der elektronischen Vorrichtung mit einer Telefonnummer, die mit dem primären Abonnementschlüssel verknüpft ist, unter Verwendung des ersten Prozessors (116', 16'), umfasst.

## Revendications

1. Système de communication (110) pour communiquer avec un réseau cellulaire, le système de communication comprenant :
un dispositif électronique (112, 12') comprenant :
un dispositif cellulaire (119),
un premier dispositif de réseau personnel sans fil, WPAN, (120),
un premier processeur (116', 16') couplé audit dispositif cellulaire et audit premier dispositif WPAN,
une unité d'affichage (22'), et
un dispositif d'entrée (124) ; et
un jeton d'informations personnelles (130) comprenant :
un second processeur (134) et un second dispositif WPAN (138) couplé à celui-ci, le second processeur étant configuré pour
stocker au moins une clé d'abonnement, et
amener ledit second dispositif WPAN à transmettre sans fil l'au moins une clé d'abonnement audit premier dispositif WPAN sur la base de sa proximité avec ce dernier, de sorte que ledit premier processeur est configuré pour amener ledit dispositif cellulaire à abonner ledit dispositif électronique au réseau cellulaire sur la base de la clé d'abonnement ;
ledit premier processeur (116', 16') étant en outre configuré pour associer ledit dispositif électronique (112, 12') à au moins une adresse e-mail associée à l'au moins une clé d'abonnement lorsque ledit dispositif électronique est abonné au réseau cellulaire,
ledit premier processeur (116', 16') étant en outre configuré pour désabonner ledit dispositif électronique (112) du réseau cellulaire sur la base d'un manque de proximité avec ledit jeton d'informations personnelles (130),
ledit second processeur (134') étant en outre configuré pour stocker une préférence personnelle et pour transmettre sans fil la préférence personnelle, par l'intermédiaire dudit second dispositif WPAN (138'), audit premier dispositif WPAN (120') sur la base de sa proximité avec ce dernier, la préférence personnelle comprenant au moins une liste personnalisée,
ledit premier processeur (116', 16') étant en outre configuré pour réaliser une opération sur la base de la préférence personnelle, l'opération consistant à afficher l'au moins une liste personnalisée sur ladite unité d'affichage (22'),
ledit premier processeur (116', 16') étant en outre configuré pour accepter des modifications sur la liste personnalisée par l'intermédiaire du dispositif d'entrée (124) du dispositif électronique et pour générer une liste personnalisée mise à jour sur la base des modifications ;
ledit premier processeur (116', 16') étant en outre configuré pour envoyer la liste personnalisée mise à jour au second processeur, et
le second processeur étant en outre configuré pour recevoir et stocker la liste personnalisée mise à jour.

2. Système de communication selon la revendication 1, dans lequel ledit premier processeur est en outre configuré pour associer ledit dispositif électronique à un numéro de téléphone associé à la clé d'abonnement lorsque ledit dispositif électronique est abonné au réseau cellulaire.

3. Système de communication (110) selon la revendication 2, dans lequel ledit premier processeur (116) est en outre configuré pour stocker une clé d'abonnement principale, pour abonner ledit dispositif électronique (112) au réseau cellulaire sur la base de la clé d'abonnement principale, et pour associer ledit dispositif électronique à un numéro de téléphone associé à la clé d'abonnement principale.

4. Système de communication (110') selon la revendication 1, dans lequel la préférence personnelle comprend en outre une apparence d'affichage, et/ou un paramètre de sonnerie, et/ou un paramètre d'application.

5. Système de communication selon la revendication 1, dans lequel l'au moins une liste personnalisée comprend une liste de contacts et/ou une liste de sites Web favoris.

6. Système de communication (10') selon la revendication 1, dans lequel lesdits second processeur (34') et second dispositif WPAN (38') sont configurés pour permettre l'exploitation dudit dispositif électronique (12').

7. Procédé de fonctionnement d'un système de communication (110') comportant un dispositif électronique (112', 12') et un jeton d'informations personnelles (130'), le dispositif électronique (112', 12') comprenant un dispositif cellulaire (119'), un premier réseau personnel sans fil, WPAN, (120'), couplé à un premier processeur (116', 16'), une unité d'affichage (22'), et un dispositif d'entrée (124), et le jeton d'informations personnelles (130') comprenant un second dispositif WPAN (138)' couplé à un second processeur (134'), le procédé comprenant :
le stockage d'au moins une clé d'abonnement dans une mémoire (136') à l'aide du second processeur ;
la transmission sans fil, à l'aide du second dispositif de réseau personnel sans fil, WPAN, (138'), de l'au moins une clé d'abonnement au premier dispositif WPAN sur la base de sa proximité avec ce dernier, de sorte que le premier processeur, par l'intermédiaire du dispositif cellulaire, abonne le dispositif électronique à un réseau cellulaire sur la base de la clé d'abonnement ;
l'association du dispositif électronique (112', 12') à au moins une adresse e-mail associée à la clé d'abonnement lorsque le dispositif électronique est abonné au réseau cellulaire, à l'aide du premier processeur (116', 16') ;
le désabonnement du dispositif électronique (112', 12') du réseau cellulaire sur la base d'un manque de proximité avec le jeton d'informations personnelles (130), à l'aide du premier processeur (116', 16') ;
ledit second processeur (134') étant en outre configuré pour stocker une préférence personnelle, la préférence personnelle comprenant au moins une liste personnalisée et le procédé comprenant en outre :
la transmission sans fil de la préférence personnelle, par l'intermédiaire dudit second dispositif WPAN (138'), audit premier dispositif WPAN (120') sur la base de sa proximité avec ce dernier ;
la réalisation d'une opération, par ledit premier processeur (116', 16'), sur la base de la préférence personnelle, l'opération consistant à afficher l'au moins une liste personnalisée sur ladite unité d'affichage (22') ;
l'acceptation, par ledit premier processeur (116', 16'), des modifications de la liste personnalisée par l'intermédiaire du dispositif d'entrée (124) du dispositif électronique et la génération d'une liste personnalisée mise à jour sur la base des modifications ;
l'envoi, par le premier processeur, de la liste personnalisée mise à jour au second processeur ; et
la réception et le stockage, par le second processeur, de la liste personnalisée mise à jour.

8. Procédé selon la revendication 7, comprenant en outre l'association du dispositif électronique (112) à un numéro de téléphone associé à la clé d'abonnement lorsque le dispositif électronique est abonné au réseau cellulaire, à l'aide du premier processeur.

9. Procédé selon la revendication 8, comprenant en outre le stockage d'une clé d'abonnement principale, l'abonnement du dispositif électronique (112', 12') au réseau cellulaire sur la base de la clé d'abonnement principale, et l'association du dispositif électronique à un numéro de téléphone associé à la clé d'abonnement principale, à l'aide du premier processeur (116', 16').
